# EUROPEAN PATENT APPLICATION

(11) **EP 4 382 230 A1**
(43) Date of publication of application: **12.06.2024**
(21) Application number: 22211864.8
(22) Date of filing: 07.12.2022
(51) Int. Cl.: B22F 10/28, B33Y 70/00, C22C 1/04, C22C 19/05, B22F 5/00

(54) **SINGLE-PHASE NICKEL ALLOY FOR ADDITIVE MANUFACTURING**

(71) Applicant: Siemens Energy Global GmbH & Co. KG, 81739 München (DE)
(72) Inventor: Deirmina, Faraz, 605 60 Svärtinge (SE); Hasselqvist, Magnus, 61213 Finspång (SE); Koenig, Slawomir, 612 31 Finspång (SE)

(57) **Abstract**

A nickel-base alloy comprising Ni as a balance and the following portions in wt% is presented:
Fe: 17.0 to 20.0,
Cr: 18.5 to 23.0,
W: 0.5 to 1.0,
C: 0.005 to 0.025,
B: 0.001 to 0.009,
Zr: 0.0005 to 0.01, and
Si: 0.02 to 0.3,
Mo: 8.0 to 10.0,
Co: 1.0 to 2.0, and, conditionally,
Al: up to 0.15,
Ti: up to 0.15,
Hf: up to 0.005,
Ta: up to 0.005,
Nb: up to 0.005,
V: up to 0.006,
Y: up to 0.003,
Sc: up to 0.001,
Zn: up to 0.001,
Mg: up to 0.010,
Na: up to 0.004,
Pb: up to 0.0005,
Sn: up to 0.003, and unavoidable impurities. Moreover, a related powder material, a related method of additive manufacturing and a component are presented which can be manufactured according to the indicated method.

## Description

The present invention relates to a nickel-based alloy for additive manufacturing, which is particularly suitable for a powder-bed-based manufacturing approach. Furthermore, a related powdery base material, a method of additive manufacturing, and a component which is or can be manufactured by the indicated method are presented.

Preferably, the component denotes a component of a turbo machine, e. g. applied in the flow path hardware of a gas turbine, like a sealing or liner component. The component is, thus, preferably made of a related superalloy. In the alternative, the component may pertain to a high-performance component, such as a component applied in power generation, in the aviation or the automotive industry.

Additive manufacturing (AM), or three-dimensional (3D) printing, is a promising manufacturing technique that makes it possible to produce complex structures and bodies that cannot easily be achieved via conventional manufacturing processes. In many additive manufacturing techniques, in particular laser powder bed fusion (L-PBF), a powder is subjected to melting followed by rapid solidification. The solidification may occur at temperature gradients and/or cooling rates of even 10⁴-10⁶ K/s.

There is a constant need in the industry for finding new materials for additive manufacturing as well as new components and/or solutions which can, e. g., be implemented via an industrialized manufacturing set-up. Furthermore, AM stands out for its short chain of process steps which enables material economization and a particularly low lead time.

Additive manufacturing in general comprises powder-bed-fusion methods, such as selective laser melting (SLM) or Laser-Powder-Bed-Fusion (L-PBF), selective laser sintering (SLS) and electron beam melting (EBM). Related machine hardware or setups for such methods usually comprise a manufacturing or build platform on which the component is built layer-by-layer after the feeding of a layer of base material which may then be melted, e. g., by an energy beam, such as a laser, and subsequently solidified. The layer thickness is determined by a recoater that moves, e.g. automatically, over the powder bed and removes excess material from a manufacturing plane or build space.

Further additive manufacturing approaches relate to "Directed Energy Deposition (DED)", such as laser cladding, electron beam or plasma welding, metal inkjet molding (MIM), so-called sheet lamination methods, or even thermal spraying (VPS, LPPS) methods.

The present invention may hence relate to a nickel (Ni) - based alloy and related metal powder for additive manufacturing, and/or to the use of such a metal powder for additive manufacturing, and to a process for producing an object component by AM.

Particularly, the known Hastelloy X is a quite weldable class of single-phase nickel superalloys. Hastelloy X^{®} (HX), a single-phase austenitic (solid solution strengthened) nickel base superalloy, is actually one of the most promising Ni super-alloy powders for additive L-PBF processing.

This alloy can be used for the fabrication of components such as gas-turbine engines, combustor parts, and high-temperature gas-cooled reactors etc. Therefore, properties of concern for the use of HX at high temperatures and exposed to non-protective atmospheres, include tensile strength, high-temperature low cycle fatigue, creep durability, creep-rupture, creep-fatigue interaction, subcritical crack growth, thermal stability, and oxidation resistance.

The as-built (AB) microstructure achieved by L-PBF differs, e. g., from that of conventional (wrought) counterparts. Similar to most single-phase alloys with FCC (face centered cubic) structure, the grain morphology in the AB condition is columnar. The microstructure comprises a cellular and/or dendritic solidification structure caused by the relatively large constitutional undercooling, with micro-segregation of the alloying elements to the cell boundaries as a result of rapid solidification (cf. above).

These features can affect both static and dynamic properties at room and high temperatures. The peculiar microstructural features associated with L-PBF processing can be homogenized by high-temperature (solution) annealing treatments such as through diffusion-controlled reactions. High-temperature properties, specifically creep resistance, can be enhanced by microstructural homogenization, removing inter alia unwanted phases at the micro-segregated regions, thereby changing the grain morphology, and facilitating an increased grain size through recrystallization and grain growth.

However, considering the cost efficiency, directly exploiting the as-built microstructure in (single-phase) superalloys adds a particular value to the AM process chain, as the structural merits can be directly exploited, and this is directly related to significant advances in the reproducibility and reliability of the process.

It is hence an object of the present invention to provide an improved alloy, powdery alloy and manufacturing approach in the indicated material class. It is a particular object of the present invention to provide a modification to the known "Hastelloy X" composition having an improved property profile thermomechanical behavior in high temperature applications. This improved alloy may relate to a modification to the Hastelloy X chemical composition which - in powder form - is suitable for AM, in particular, for the generative manufacture, hybrid manufacture, e. g., building up a structure additively on a pre-manufactured substrate, and/or a repair approach of turbine components.

The mentioned object is achieved by the subject-matters of the independent claims. Advantageous embodiments are subject-matters of the dependent claims.

An aspect of the present invention relates to a nickel-base alloy comprising Ni as a balance and the following portions in wt%: 17.0 to 20.0 iron (Fe), 18.5 to 23.0 chromium (Cr), 0.5 to 1.0 tungsten (W), 0.005 to 0.025 carbon (C), 0.001 to 0.009 boron (B), 0.0005 to 0.01 zirconium (Zr), 0.02 to 0.3 silicon (Si), 8.0 to 10.0 molybdenum (Mo), 1.0 to 2.0 cobalt (Co), and, conditionally, i.e. if unavoidable or coincidentally or inherently present due to the production route, such as through fluidization: up to 0.15 aluminum (Al), up to 0.15 titanium (Ti), up to 0.005 hafnium (Hf), up to 0.005 Tantalum (Ta), up to 0.005 niobium (Nb), up to 0.006 vanadium (V), up to 0.003 Yttrium (Y), up to 0.001 scandium (Sc), up to 0.001 zinc (Zn), up to 0.010 magnesium (Mg), up to 0.004 sodium (Na), up to 0.0005 lead (Pb), up to 0.003 tin (Sn), and possibly unavoidable impurities which may (if any) include sulfur (S), phosphorus (P), nitrogen (N), and oxygen (O).

This chemistry of alloy composition particularly excels in a significantly improved creep (stress-rupture) performance in the as-built (as-manufactured) condition. Furthermore, e. g., owed to an avoidance of high temperature solubilizing and homogenization of the additively manufactured articles and grain growth, manufacturing complexity of the manufacturing approach is significantly lowered and possible structural distortions and dimensional changes minimized - which may otherwise need to be further tackled with the high temperature thermal treatments.

In an embodiment the alloy comprises (further specifying the above-indicated carbon range) 0.010 to 0.020 of C. As will also be further described below in the exemplary embodiments, this specified carbon range imparts particular advantages in terms of the alloy's creep strength, fatigue behavior and/or vulnerability to solidification cracks, for instance.

In an embodiment the alloy comprises (further specifying the above-indicated silicon range) 0.02 to 0.25 of Si. As will also be described further below, this specified silicon range as well imparts particular advantages in terms of the alloy's creep strength, fatigue behavior and/or vulnerability to solidification cracks, for instance.

In an embodiment the alloy comprises (further specifying the above-indicated chromium range) 20.5 to 23.0 of Cr. As will also be described further below, this specified chromium range as well imparts particular advantages in terms of the alloy's creep strength, fatigue behavior and/or vulnerability to solidification cracks, for instance.

In an embodiment the alloy comprises (further specifying the above-indicated boron range) 0.002 to 0.005 of B. As will also be described further below, this specified boron range as well imparts particular advantages in terms of the alloy's creep strength, and/or vulnerability to solidification cracks, for instance. More particularly, this boron content defines an optimum or trade-off in the said properties, as - like outlined below - boron beneficially suppresses carbide formation at the grain boundaries, therewith effectively delaying the onset of fatigue behavior, like time-to-rupture.

In an embodiment the alloy comprises (further specifying the above-indicated zirconium range) 0.0005 to 0.004 of Zr. As will also be described further below, this specified zirconium range as well imparts particular advantages in terms of the alloy's creep strength, fatigue behavior and/or vulnerability to solidification cracks, for instance.

In an embodiment the alloy comprises, as unavoidable impurities, particularly up to 0.025 wt% of oxygen and/or up to 0.005 of nitrogen as traces of these elements are usually unavoidable and yet not detrimental in gas atomization practice of powder and/or alloy materials.

In an embodiment the nickel-base alloy comprises elements according to the relations C + B + Zr + Hf < 0.04 in wt.%. This embodiment is particularly advantageous as the overall share of at least C, B and Zr in the alloy composition should accordingly be controlled or limited. By contrast, an increased solidification range (cf. below) and/or an increased concentration of these elements can adversely result in a greater solidification cracking susceptibility during the laser-based AM processing.

In an embodiment the nickel-base alloy comprises elements according to the relations Al + Ti + Hf + Nb + Ta + Zr < 0.15 in wt.%. This specified absolute relation of the indicated elements reasonably defines an upper limit in terms of the alloy's creep strength, fatigue behavior and/or vulnerability to solidification cracks for instance.

In an embodiment the nickel-base alloy is single-phase alloy. According to this embodiment it is understood that the inventive alloy is, though being compositionally complex, structurally kept simple, e. g. being free of precipitation phases.

A further aspect of the present invention relates to a powder material of the described alloy, preferably for the additive manufacture of a component.

A further aspect of the present invention relates to an additive manufacturing of the component from a powdery base material of the alloy, wherein the method is preferably a powder bed fusion or laser metal deposition approach.

In an embodiment the method is a repair and/or hybrid manufacturing method. In the latter case said method may include an additive buildup on a pre-existing or pre-manufactured part, such as a substrate or support.

A further aspect of the present invention relates to a component comprising a structure which is or can be manufactured by the described method, wherein the structure comprises, e. g., also a chevron-like grain pattern.

Advantages and embodiments relating to the described alloy and/or the described powder material are valid or pertain likewise to the method and/or the described component, or vice versa.

Further, features and advantageous embodiments become apparent from the following description of the exemplary embodiment in connection with the Figures.
Figure 1a and 1b each shows scanning electron microscopy (SEM) graphs of an as-manufactured (as-built) alloy structure at different resolutions.
Figure 2 indicated also in a SEM picture a result of a stress-rupture-tests of a related conventional alloy.
Figure 3 indicates in the context of the present invention a mobility (diffusion coefficient) of boron relative to carbon in an FCC nickel matrix.
Figure 4 indicates an equilibrium phase diagram of a Hastelloy-X-type material in FCC structure, wherein the mass percentage of boron is plotted on the ordinate.
Figure 5 indicates in a table a "Scheil" solidification ranges (right column) at different carbon (top left column) and boron (bottom left) percentages.
Figure 6 shows in an Arrhenius-type equation a linear relationship of the time-to-rupture plotted over the boron content on the ordinate in ppm (parts per million).
Figure 7 indicates a result of a creep ductility (elongation) of the structure in percent as a function of the boron content in ppm.

Similar elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

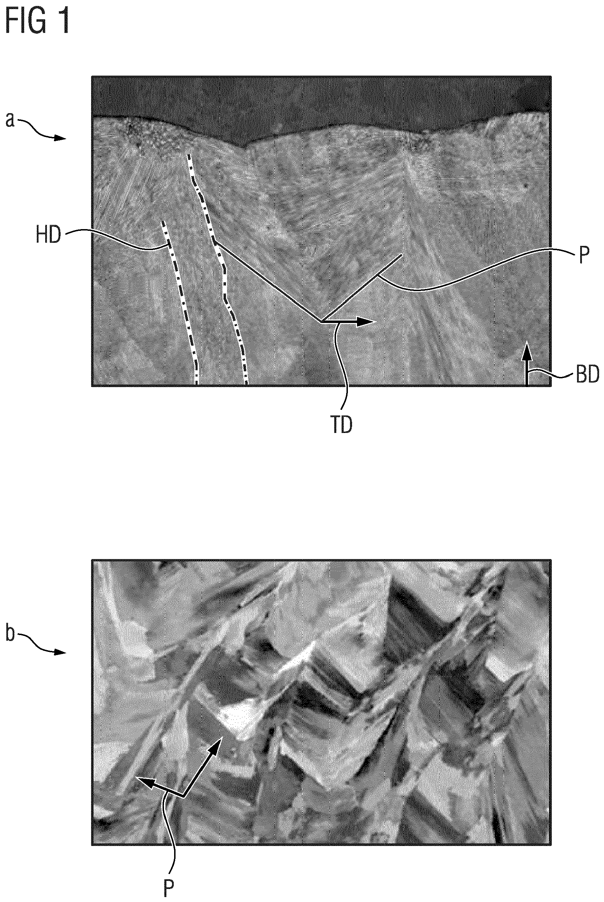

Figure 1a shows a SEM micrograph from a cut sample of a single-phase austenitic alloy, such as from the Hastelloy X chemistry. This structure pertains to an as-built structure from a L-PBF additive manufacturing approach. It is shown that the grain morphology at the weld beads (cf. melt pool) overlap and resembles a peculiar chevron or chevron-like shape. This is particularly indicated in Figure 1a by the V-shaped lines oriented at a 45° angle with respect to the building direction (BD) which points upwards in the image. A transverse direction TD is as well indicated pointing in a direction perpendicular to BD.

The chevron-like grain pattern P becomes even more evident by looking at the enlarged resolution SEM picture of Figure 1b. The chevron or V-shaped morphology can be explained by a constant competition between epitaxial growth along the heat dissipation direction HD, highlighted by the fine dashed lines in Figure 1a, and heterogeneous nucleation with oralong the thermal gradients pointing to the center of each melt pool or chevron pattern. These patterns P particularly evolve in the remelted overlap zone, which eventually leads to small and periodical angular shifts of the crystallographic lattice of grains with high dislocation densities.

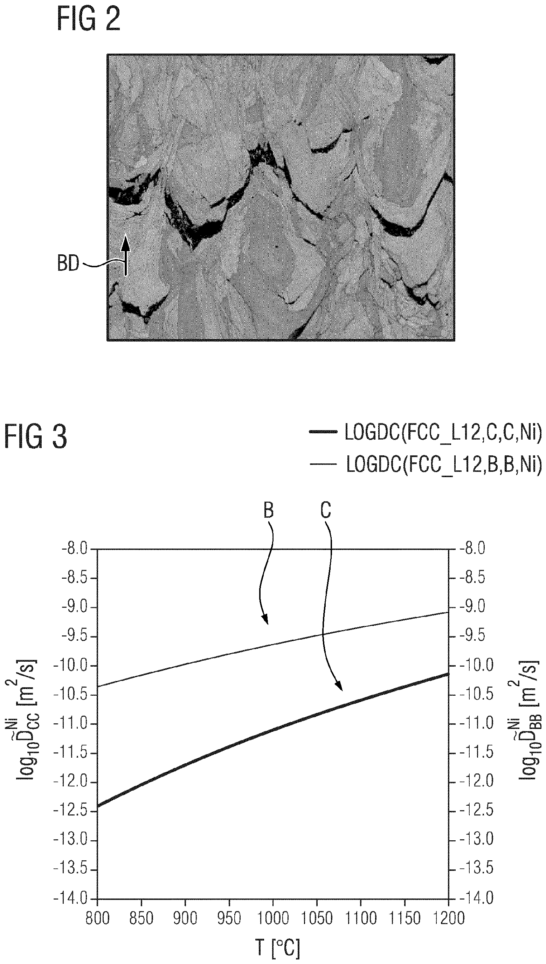

Figure 2 shows by way of the dark region s in the SEM image a rupture crack propagation path, indicating how cracks are being formed at the chevron grain boundaries. The chevron grains can actually govern the rupture mechanism, at least when diffusional creep dominates, and lead to a shorter creep lifetime of the structure. Structural growth and link-up of micro voids nucleating at the sites of precipitates, especially grain boundary carbides, is followed by a linkage of microcracks along the "chevron" grain boundaries. This is - in the given material class - a particular characteristic of the L-PBF process, and shows roughly a 45° orientation with respect to a stress-rupture loading direction (i.e. planes with maximum resolved shear stress) before the final failure of the related structure.

By way of Figures 3 onwards an inventive (modified) alloy composition is provided, such as a modified powdery alloy for additive manufacturing routs, like laser metal deposition or L-PBF, be it for generative or repair applications.

The presented nickel-base alloy comprises Ni as a balance and the following portions in wt%: 17.0 to 20.0 Fe, 18.5 to 23.0 chromium Cr, 0.5 to 1.0 W, 0.005 to 0.025 C, 0.001 to 0.009 boron B, 0.0005 to 0.01 Zr, 0.02 to 0.3 Si, 8.0 to 10.0 Mo, 1.0 to 2.0 cobalt Co, and, conditionally or if unavoidable or coincidentally or inherently present such as due to the production route: up to 0.15 Al, up to 0.15 Ti, up to 0.005 Hf, up to 0.005 Ta, up to 0.005 Nb, up to 0.006 V, up to 0.003 Y, up to 0.001 Sc, up to 0.001 Zn, up to 0.010 Mg, up to 0.004 Na, up to 0.0005 Pb, up to 0.003 Sn, and possibly unavoidable impurities which may include S, P, N, and/or O.

As a particular merit of the present invention, carbide formation at the grain boundaries is suppressed by the given composition. Consequently, also micro-void formation can be delayed in time (e.g. over the lifetime of a component made from this inventive alloy). This is particularly owed to the addition of B, and Zr as an alloying element to the indicated composition within defined ranges.

By a variation of boron in the chemistry, said delay of void formation occurs during the high-temperature loading in the related structure and prevents evolvement of carbides at the grain interface. This significantly improves creep strength as the highly soluble boron (cf. Figure 3) diffuses to the grain boundaries and occupies carbon sites or prevents carbon to diffuse to the grain boundaries. I. e., carbon diffusion is suppressed. Hence, lifetime of the related component can be significantly increased, and time-to-rupture tr reduced.

This situation can be explained by the higher mobility of boron relative to carbon in the (FCC) Ni crystal, resulting in a faster diffusion of B to the grain boundaries as shown in Figure 3. Moreover, in order to reduce the impurity segregation at the grain boundaries, Zr is added in minor fractions. Moreover, zirconium is introduced as an alloying element effectuating sulfur scavenging.

In an even more preferred composition, the presented alloy comprises - instead of the above indicated ranges - for carbon, silicon, chromium, boron and zirconium in wt.%: 0.010 to 0.020 C, 0.02 to 0.25 Si, 20.5 to 23.0 Cr, 0.002 to 0.005 B, 0.0005 to 0.004 Zr, and optional or unavoidable impurities, such as up to 0.025 O, and up to 0.005 N.

A reliable limit for C in this context is a content of up to 0.025 wt.% at 0.005 wt.% B.

A rather conservative and probably even more advantages limit for C is a content of up to 0.020 wt.% at 0.005 wt.% B.

The presented nickel-base alloy may further comprise elements according to the relation (in wt.%): C + B + Zr + Hf < 0.04.

At least the elements C, B and Zr generally increase the solidification range. However, an increased concentration of these elements can adversely result in a solidification cracking susceptibility in laser-based AM processing. Therefore, their overall percentages in the alloy composition should be limited.

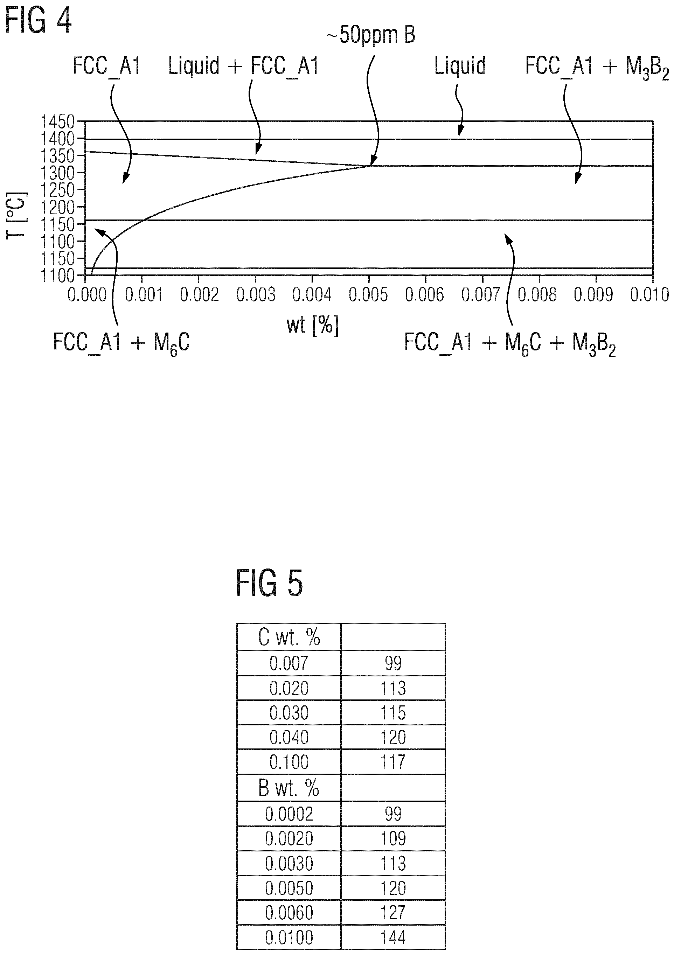

Regarding boron, the maximum solubility limit of this element at high temperature in the given nickel matrix is, thus, preferbly around 0.005 in wt. % (cf. Figure 4).

Figure 4 apparently shows an equilibrium phase diagram at a (FCC) Hastelloy X standard composition, wherein only the boron content is plotted on the ordinate. The point at 50 ppm (equal to 0,005 weight percent (wt%)) is a reasonable upper limit.

For the above-described effect of boron, suppressing carbide formation, B is favorable in order to increase creep strength. However, adding more than said limit of boron leads to the forming of adverse borides. Thanks to the fast solidification rates in laser-based AM, the amount of B should be trapped inside the supersaturated FCC matrix. This particularly allows to exploit boron's faster diffusion (as compared to carbon) to grain boundaries during the related component's high temperature operation. Hence, not more than a maximum of around 0.005 wt.% B is actually recommended.

Regarding carbon, as outlined already above, a maximum or optimum of 0.02 wt.% in the presence of 0.005 wt.% B, still guarantees the reduced solidification range compared with the conventional Hastelloy X (comprising e. g. 0.05 to 0.10 wt.% carbon) .

The inventive alloy composition further comprises elements of or close to the relation in wt.%: Al + Ti + Hf + Nb + Ta + Zr < 0.15.

The table of Figure 5 indicates "Scheil" solidification temperature ranges (in °C) at different carbon and boron shares (left column). In the top left column, the carbon share is indicated at a fixed boron content of 0.003 wt%.

In the bottom left column, on the other side, the boron share is indicated at a fixed carbon content of 0.02 wt%. The right column then lists said solidification ranges of Scheil under the assumption that so-called second phase formation from a remaining liquid is allowed.

Assumptions from the "Scheil" equations are particularly suitable to model the situation in L-PBF AM regarding its inherently large temperature gradients.

Said fairly short "Scheil" range, may qualitatively indicate a (solidification) cracking risk as comparably small, as a smaller solidification temperature (range) lets the related alloy possibly better accommodate for microcracks, whereas a larger range indicated an increased likelihood of cracking, i. e. cracks between already solidified structural dendrites and the remaining (interdendritic) liquid during solidification.

The particular range of 120° C is marked boldly in Fig. 5, indicating a threshold in the context of the present invention below which is solidification cracking risk can be held reasonably low or tolerable.

An addition of Zr to e.g. 100 ppm does probably not dramatically change the solidification range. However, a still increased or an excessive Zr content would result in unfavorable grain boundary ZrC formation at high temperature.

The time-to-rupture (tr) for a commercial (wrought) alloy in the solution-annealed state (under the same test condition as has been performed during testing of the inventive alloy) is 110 to 160 h, as found in the literature, while the manufacturer datasheets state a time to rupture tr of around 100 h for the expected. By contrast, the inventive composition favorably led to a time-to-rupture of up to around 500 h, at a gradual and significant increase in creep ductility.

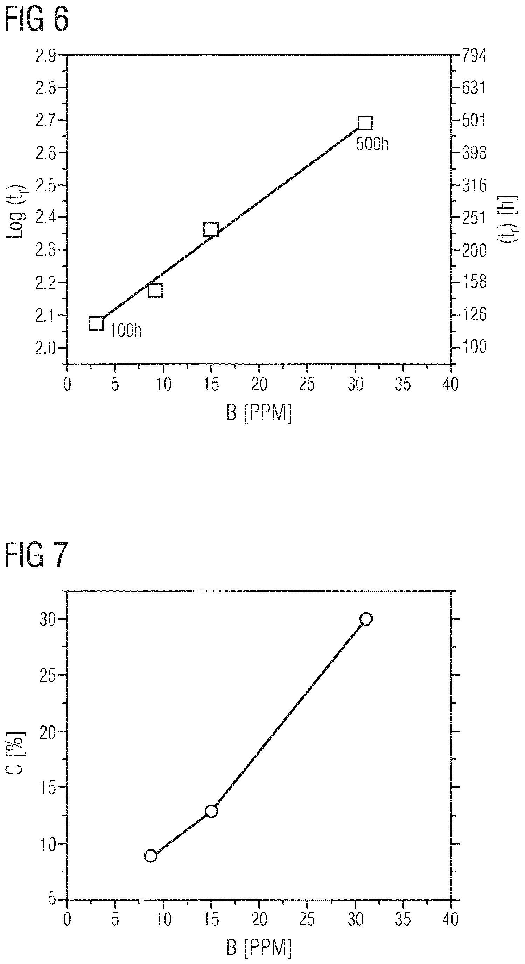

A tr at 816°C for each B level was put in the form of the Arrhenius equation (i.e., log(tr) vs. B wt.% in ppm) in Figure 6. Evidentially, a linear correlation between B wt.% and the tr is found. In other words, a slight increase of Boron in the alloy leads to a significant increase of time-to-rupture tr.

This indicates under the high-temperature conditiopns (cf. 816°C, 103 MPa thermo-mechanical load) and for boron contents studied in this context, a delay in the mentioned time-to-rupture tr driven by a diffusion-controlled mechanism as explained above. According to further modelling prospects, tr can potentially rise even further up to 650 to 700h by incorporation of 0.004 wt.% B.

Figure 7 further indicates the tested creep ductility parameter over the boron content in a similar way as shown in Figure 6. It is apparent that creep ductility increases likewise almost linearly with the boron content in the given ranges.

The alloy and/or the component as referred to herein may particularly relate to a part or an article of complex shape, such as with filigree portions of structures. Preferably, said component may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

## Claims

1. A nickel-base alloy comprising Ni as a balance and the following portions in wt%:
Fe: 17.0 to 20.0,
Cr: 18.5 to 23.0,
W: 0.5 to 1.0,
C: 0.005 to 0.025,
B: 0.001 to 0.009,
Zr: 0.0005 to 0.01,
Si: 0.02 to 0.3,
Mo: 8.0 to 10.0,
Co: 1.0 to 2.0, and, conditionally,
Al: up to 0.15,
Ti: up to 0.15,
Hf: up to 0.005,
Ta: up to 0.005,
Nb: up to 0.005,
V: up to 0.006,
Y: up to 0.003,
Sc: up to 0.001,
Zn: up to 0.001,
Mg: up to 0.010,
Na: up to 0.004,
Pb: up to 0.0005,
Sn: up to 0.003, and unavoidable impurities.

2. The nickel-base alloy according to claim 1, comprising, in wt.%,
C: 0.010 to 0.020,
Si: 0.02 to 0.25,
Cr: 20.5 to 23.0,
Mo: 8.0 to to 10.0,
Co: 1.0 to 2.0,
W: 0.5 to 1.0,
Fe: 17.0 to 20.0,
B: 0.002 to 0.005,
Zr: 0.0005 to 0.004, and, conditionally,
Al: up to 0.15,
Ti: up to 0.15,
Hf: up to 0.005,
Ta: up to 0.005,
Nb: up to 0.005,
V: up to 0.006,
Y: up to 0.003,
Sc: up to 0.001,
Zn: up to 0.001,
Mg: up to 0.010,
Na: up to 0.004,
Pb: up to 0.0005,
Sn: up to 0.003, unavoidable impurities, particularly
O: up to 0.025, and
N up to 0.005.

3. The nickel-base alloy according to claim 1 or 2, comprising elements according to the following relation in wt.%: C + B + Zr + Hf < 0.04.

4. The nickel-base alloy according to claim 1 or 2, comprising elements according to the following relation in wt.%: Al + Ti + Hf + Nb + Ta + Zr < 0.15.

5. The nickel-base alloy according to according to one of the previous claims, being a single-phase alloy.

6. A powder material of an alloy according to one of the previous claims for the additive manufacture of a component.

7. A method of additive manufacturing a component from a powdery alloy base material, e. g. according to the one of the previous claims, the method being powder bed fusion or laser metal deposition.

8. The method according to claim 7 being a repair and/or hybrid manufacturing method.

9. A component comprising a structure manufactured by the method of claims 7 or 8.
